# EUROPEAN PATENT SPECIFICATION

(11) **EP 3 670 259 B1**
(45) Date of publication and mention of the grant of the patent: **22.09.2021**
(21) Application number: 18214025.1
(22) Date of filing: 19.12.2018
(51) Int. Cl.: B60Q 1/08, B60Q 1/076, B62J 6/02

(54) **ILLUMINATION DEVICE FOR VEHICLE HEADLAMPS**
BELEUCHTUNGSVORRICHTUNG FÜR FAHRZEUGSCHEINWERFER
DISPOSITIF D'ÉCLAIRAGE POUR PHARES DE VÉHICULES

(43) Date of publication of application: 24.06.2020
(73) Proprietor: ZKW Group GmbH, 3250 Wieselburg (AT)
(72) Inventor: Kyselica, Jaroslav, 95703 Dezerice (SK); Kucka, Tomas, 951 44 Vycapy/Opatovce (SK)
(74) Representative: Patentanwaltskanzlei Matschnig & Forsthuber OG

(56) References cited:
- EP-A1- 3 141 425
- EP-A2- 0 833 099
- WO-A1-2010/076741
- DE-T5-112015 000 584
- JP-A- 2017 100 500
- TW-A- 201 803 761
- US-A- 5 426 571
- US-A- 5 806 956
- US-A1- 2003 002 288

## Description

The invention relates to an illumination device for vehicle headlamps, especially for single-track vehicle headlamps, according to the preamble of claim 1.

Further, the invention relates to a stabilized illumination device, comprising at least one illumination device according to the invention, an external control unit and at least one roll angle sensor configured to determine a roll angle from a defined standard position of the illumination device around the first axis, said external control unit is configured to frequently, preferably constantly, receive a roll angle from the at least one roll angle sensor and to control the adjusting mechanism in order to keep the optical unit in the standard position.

Moreover, the invention relates to a vehicle headlamp for single-track vehicles, comprising at least one illumination device and/or at least one stabilized illumination device.

A problem encountered in the case of single-track motor vehicles, such as motorcycles, as they are driven around curves due to the inclination of the vehicle. As a rule, a headlight that is rigidly connected with the motorcycle or with the fork of the motorcycle can no longer illuminate the roadway in front of the motorcycle in an optimum fashion.

It should be noted, that the invention is basically suitable for every vehicle that experience inclination during cornering.

The setup of the light distribution, in particular a low beam distribution, is prescribed by law and measured on the vehicle standing straight. In each turn, the vehicle tilts with the headlamp or the illumination device about the longitudinal axis of the vehicle.

As a result, on one hand the visibility in the curve is reduced, on the other hand the oncoming traffic is blinded. This leads to a significant impairment of traffic safety.

There are various approaches in the state of the art to remedy this problem; by way of example, it might be mentioned that one can make provision for positioning the entire headlight in the motorcycle in an accordingly movable manner so that it can be swung simply upon the inclination of the motorcycle.

This is disadvantageous since the positioning of the entire headlight of the motorcycle is expensive, and also, since the entire headlight must be swung when driving around a curve. As a result, one must move a relatively great mass, the movement becomes slow, and furthermore, much structural space is required.

EP 3 141 425 A1 discloses an illumination device for vehicle headlamps, especially for single-track vehicle headlamps, comprising:
- an optical unit with at least one light source, said optical unit is configured to form a light distribution with a cut-off line, wherein the light distribution being radiated in a main beam direction and
- an adjusting mechanism for rotating the optical unit about a first axis by means of a pivot bearing, wherein the first axis is oriented parallel to the main beam direction, wherein the pivot bearing comprises a first ring and a second ring, arranged concentrically and rotatable to each other about the first axis, wherein the optical unit is attached to the first ring, and wherein the adjusting mechanism comprises
- a holder, attached to the second ring, and
- a gear wheel element, which is inserted in an opening area of the holder and rotatable about the first axis, said gear wheel element is attached to the first ring of the pivot bearing.

It is an object of the invention to provide an enhanced illumination device.

To achieve this object, the illumination device of the initially mentioned kind is further developed in that the adjusting mechanism further comprises
- a linear drive with a toothed rack, said linear drive is attached to the holder and configured to generate a linear motion of the toothed rack along a second axis,
wherein the toothed rack is configured to engage with the gear wheel in order to convert a linear motion of the toothed rack into an angular motion of the gear wheel element and the optical unit about the first axis, and wherein
the optical unit comprises at least one light-forming component configured to form the light distribution of the optical unit by forming light emitted by the at least one light source, and wherein the optical unit is arranged on a mount, said mount is attached to the first ring of the pivot bearing, wherein
the optical unit comprises at least one heatsink configured to dissipate the heat of the at least one light source, wherein the at least one light source is arranged on the at least one heatsink, and wherein
the mount is the heatsink configured to dissipate the heat of the at least one light source.

If, when driving along a curve, the motor vehicle inclines into the curve, then only the optical unit, which forms a light distribution, preferably a low beam distribution with a cut-off line, upon a roadway, is tilted or rotated around the first axis so that the light image on the roadway is accordingly adapted. It is now no longer necessary to rotate the entire headlamp, as is the case in the state of the art.

By rotating the entire optical unit, one can make sure that the entire light image or light distribution is rotate accordingly and not just parts thereof. That prevents undesirable disturbing effects on the light distribution that is adapted to the inclination of the vehicle.

For example, motorcycle headlamps have a beam pattern that is shaped in accordance with legal requirements to illuminate the road ahead without blinding the opposite traffic. The pattern suits all the requirements when it is aligned with the horizon. However, when the motorcycle rolls as in taking a curve, the range of the light beam on the inner side of the curve is significantly reduced, thus causing a safety risk in that the driver cannot see objects ahead in his path, whilst the light beam on the outer side of the curve blinds the opposite traffic.

Advantageously, the optical unit is arranged on one side of the pivot bearing and the holder is arranged on the side facing away from the optical unit of the pivot bearing.

This arrangement is very space-saving, in particular if the illumination device is arranged in a vehicle headlamp.

Preferably, the linear drive comprises an actuating element, preferably a rod-shaped element on which the toothed rack is attached, said actuating element is moveable along the second axis.

Advantageously, the gear wheel element comprises a base-body from which a gear wheel is protruding, said base-body is inserted in the opening area of the holder.

In an assembled state of the illumination device, the gear wheel is protruding along the first axis from the base-body.

The gear wheel element can be made of an integral piece of one material or a single molded piece.

Advantageously, the adjusting mechanism comprises an internal control unit to control the linear drive.

Preferably, the pivot bearing is a ball bearing or a sliding bearing.

Advantageously, the at least one light-forming component is designed as a reflector and/or a light-guiding element.

Advantageously, the at least one light-forming component is designed as a light-guiding element. The light-guiding element represents any part/material/medium which geometry allows a total inner reflection.

Advantageously, the optical unit comprises at least one projection lens and/or a shade. Advantageously, the optical unit can be rotated within an angle between 0° and 70° about the first axis.

The object can also be achieved by stabilized illumination device for irradiating a stabilized light distribution, comprising at least one illumination device, an external control unit and at least one roll angle sensor configured to determine a roll angle from a defined standard position of the illumination device around the first axis, said external control unit is configured to frequently, preferably constantly, receive a roll angle from the at least one roll angle sensor and to control the adjusting mechanism in order to keep the optical unit in the standard position.

More specifically, the stabilized illumination device is configured for automatically maintaining the pattern of the light beam or light distribution levelled horizontally in the face of variations in the roll angle of the vehicle with respect to the horizon.

A standard position represents a normal position assumed by the rotatable optical unit during the straight forward drive of a motorcycle and is, when expressed in terms of the angle of rotation of the optical unit around the first axis, represented by a zero angle position. Hereby, the optical unit can rotate up to +/- 35° from the standard position.

The roll angle of the vehicle can be determined by various already known techniques; for example, it can be determined via ultrasound or gyroscopically or by pressure comparison in motorcycle fork legs.

The object can also be achieved by a vehicle headlamp for single-track vehicles, comprising at least one illumination device and/or at least one stabilized illumination device.

In the following, in order to further demonstrate the present invention, illustrative and non-restrictive embodiments are discussed, as shown in the drawings, which show:
Fig. 1A a perspective view of an illumination device comprising an optical unit and an adjusting mechanism for rotating the optical unit;
Fig. 1B a schematic cross section along axis B-B of Fig. 1A,
Fig. 2A a back view of the illumination device of Fig. 1A,
Fig. 2B a detailed view of a linear drive and a gear wheel element of the adjusting mechanism of Fig. 2A or Fig. 1A;
Fig. 3A a schematic representation of a light distribution with a vehicle headlamp of a single-track vehicle driving straight forward;
Fig. 3B a schematic representation of a light distribution with a vehicle headlamp according to prior art of a single-track vehicle driving along a curve;
Fig. 3C a schematic representation of a light distribution with a vehicle headlamp according to the invention of a single-track vehicle driving, inclined along a curve; and
Fig. 4 a schematic representation of a stabilized illumination device.

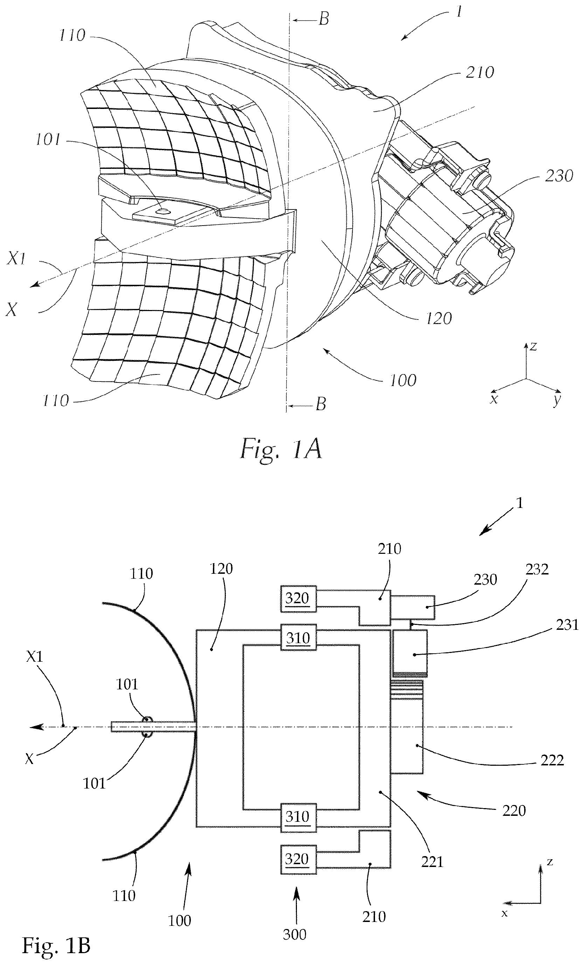

**Fig. 1A** shows an illumination device 1 for vehicle headlamps, especially for single-track vehicle headlamps, in a perspective view. The illumination device **1** of **Fig. 1A** comprising an optical unit **100** with two light-forming components, which are formed as reflectors **110**, said reflectors **110** are configured to form a light distribution with a cut-off line, which is radiated into a main beam direction **X1**, by means of the light of two light sources **101**, respectively. The optical unit **100** further comprises a heatsink **120**, configured to dissipate the heat of the light sources **101**, wherein the reflectors **110** and the light sources **101** are mounted on the heatsink **120**.

The illumination device **1** further comprises an adjusting mechanism **200** for rotating the optical unit **100** about a first axis **X** by means of a pivot bearing **300**, as shown in **Fig. 1B**, wherein the first axis **X** is oriented parallel to the main beam direction **X1**.

The pivot bearing **300** comprises a first ring **310** and a second ring **320**, arranged concentrically and rotatable to each other about the first axis **X**, wherein the optical unit **100** is attached to the first ring **310**. The pivot bearing **300** can be a ball bearing or a sliding bearing, wherein the optical unit **100** can be rotated at a maximum angle of 70° about the first axis **X**.

The adjusting mechanism **200** comprises a holder **210**, attached to the second ring **320**, a gear wheel element **220**, which comprises a base-body **221** from which a gear wheel **222** is protruding, said base-body **221** is inserted in an opening area of the holder **210** and is rotatable about the first axis **X**, said gear wheel element **220** is attached to the first ring **310** of the pivot bearing **300**, said adjusting mechanism further comprises a linear drive **230** with a toothed rack **231**, said linear drive **230** is attached to the holder **210** and configured to generate a linear motion of the toothed rack **231** along a second axis **A**.

The gear wheel element **220** can be made as an integral piece of one material or a single molded piece.

Further, the optical unit **100** is arranged on one side of the pivot bearing **300** and the holder **210** is arranged on the side facing away from the optical unit **100** of the pivot bearing **300**.

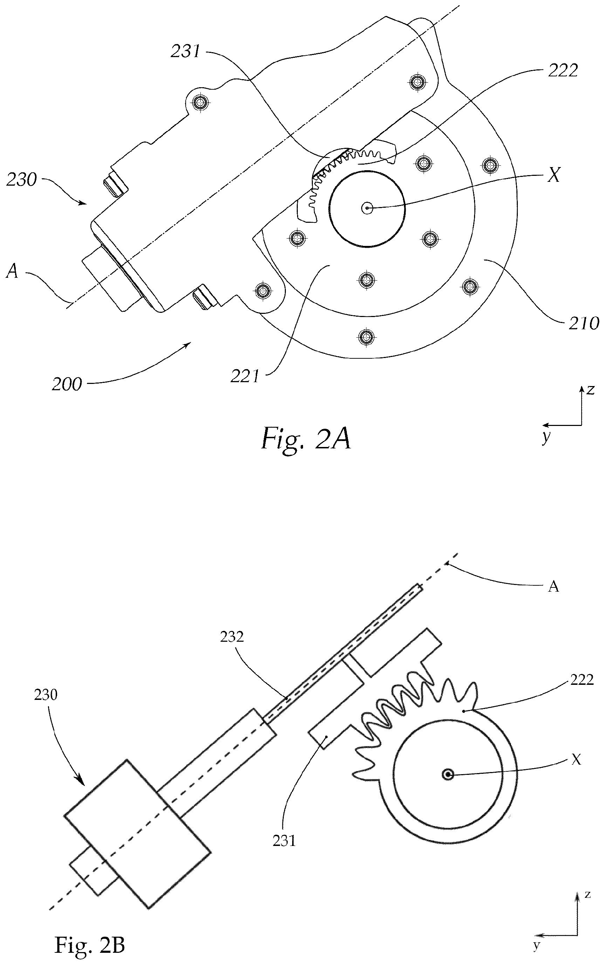

As can be seen for instance in **Fig. 2B** in more detail, the toothed rack **231** engages with the gear wheel element **220** in order to convert a linear motion of the toothed rack **231** along the second axis **A** into an angular motion of the gear wheel element **220** and the optical unit **100** about the first axis **X**. The linear drive **230** comprises an actuating element **232**, on which the toothed rack **231** is attached, said actuating element **232** is configured to carry out a linear motion along the second axis **A**.

In the example shown in **Fig. 2B**, the adjusting mechanism **200** comprises an internal control unit (not shown) to control the linear drive **230**.

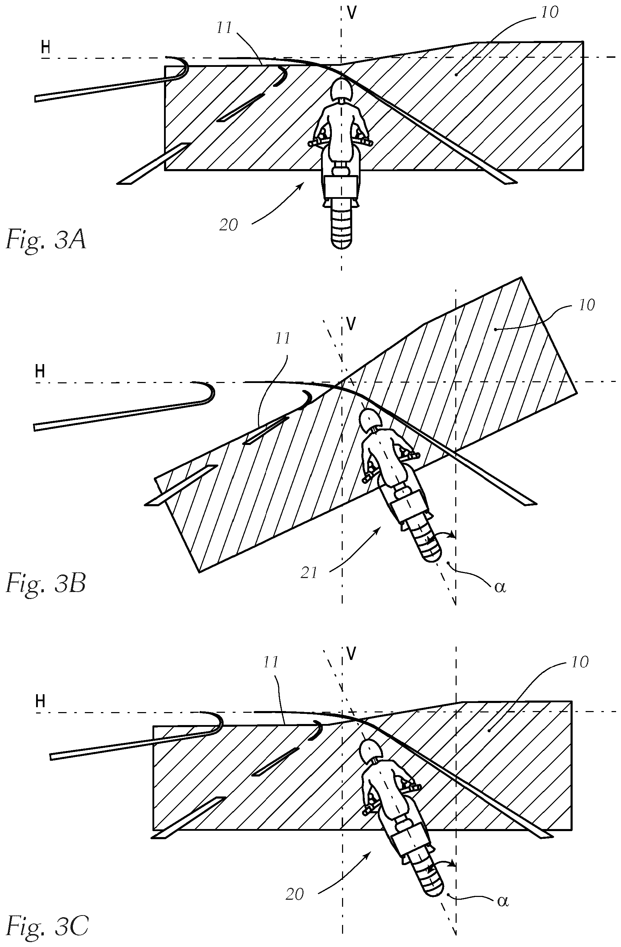

**Fig. 3A** shows a motorcycle **20** with a stabilized illumination device **2** for stabilizing a light distribution **10**, wherein the motorcycle **20** drives straight forward with no tilt or any roll angle, which determine a standard position for the motorcycle **20** and/or the light distribution **10**, and the cut-off line **11** of the light distribution **10** is parallel to the horizon **H.** The entire illumination device can be arranged in a fixed manner in a housing (not shown) closed by means of a covering disc or a headlight lens, and built into a motor vehicle in a corresponding opening.

**Fig. 3B** shows an inclined motorcycle **21** with a vehicle headlamp of prior art, wherein the light distribution **10** formed by the vehicle headlamp is not rotated around the first axis **X**, therefore the cut-off line **11** of the light distribution **10** is not parallel to the horizon during driving along a curve and could blind oncoming traffic.

**Fig. 3C** shows the motorcycle of **Fig. 3A**, said motorcycle **20** drives along a curve and is inclined at a roll angle **α**, as can be seen in **Fig. 3C**. The light distribution **10** in **Fig. 3C** is aligned or rotated around the first axis **X** about the same amount of the roll angle **α** due to the stabilized illumination device **2**, but in the opposite direction or inclination of the tilted motorcycle **20**.

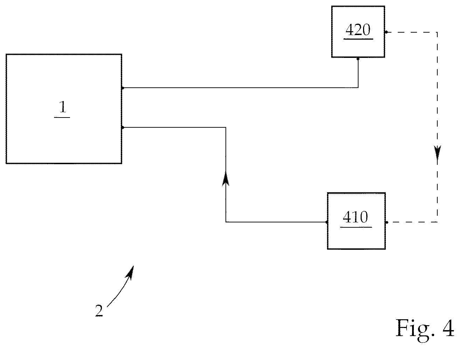

**Fig. 4** shows a schematic representation of the stabilized illumination device **2** of **Fig. 3A** and **3C**, said stabilized illumination device **2** comprises at least one illumination device 1 according to the invention, an external control unit **410** and at least one roll angle sensor **420** configured to determine a roll angle **α** from a defined standard position of the illumination device 1 around the first axis **X**, for instance the determined standard position in regard to

**Fig. 3A**, said external control unit **410** is configured to frequently, preferably constantly, receive a roll angle **α** from the at least one roll angle sensor **420** and to control the adjusting mechanism **200** in order to keep the optical unit **100** in the standard position. In other words, the external control unit **410** uses the signal from the roll angle sensor **420** to control the adjusting mechanism **200** to adjusting the rotational orientation of the optical unit **100**.

More specifically, the stabilized illumination device **2** is configured for automatically maintaining the pattern of the light beam or light distribution levelled horizontally in the face of variations in the roll angle **α** of the vehicle with respect to the horizon.

A standard position represents generally a normal position assumed by the rotatable optical unit **100** during the straight forward drive of a motorcycle and is, when expressed in terms of the angle of rotation of the optical unit **100** around the first axis **X**, represented by a zero angle position.

The roll angle **α** of the vehicle can be determined by various already known techniques; for example, it can be determined via ultrasound or gyroscopically or by pressure comparison in motorcycle fork legs.

### LIST OF REFERENCE SIGNS

| | |
|---|---|
| Illumination device... | 1 |
| Stabilized illumination device... | 2 |
| Light distribution... | 10 |
| Cut-off line... | 11 |
| Motorcycle... | 20 |
| Motorcycle (prior art)... | 21 |
| Optical unit... | 100 |
| Light source... | 101 |
| Light-forming member... | 110 |
| Heat sink... | 120 |
| Adjusting mechanism... | 200 |
| Holder... | 210 |
| Gear wheel element... | 220 |
| Base-body... | 221 |
| Gear wheel... | 222 |
| Linear drive... | 230 |
| Toothed rack... | 231 |
| Actuating element... | 232 |
| Pivot bearing... | 300 |
| First ring... | 310 |
| Second ring... | 320 |
| External control unit... | 410 |
| Roll angle sensor... | 420 |
| Roll angle... | α (Alpha) |
| First axis... | X |
| Main beam direction... | X1 |
| Second axis... | A |
| Horizon... | H |

## Claims

1. Illumination device (1) for vehicle headlamps, especially for single-track vehicle headlamps, comprising:
- an optical unit (100) with at least one light source (101), said optical unit (100) is configured to form a light distribution with a cut-off line, wherein the light distribution being radiated in a main beam direction (X1) and
- an adjusting mechanism (200) for rotating the optical unit (100) about a first axis (X) by means of a pivot bearing (300), wherein the first axis (X) is oriented parallel to the main beam direction (X1), wherein
the pivot bearing (300) comprises a first ring (310) and a second ring (320), arranged concentrically and rotatable to each other about the first axis (X), wherein the optical unit (100) is attached to the first ring (310), and wherein
the adjusting mechanism (200) comprises
- a holder (210), attached to the second ring (320), and
- a gear wheel element (220), which is inserted in an opening area of the holder (210) and rotatable about the first axis (X), said gear wheel element (220) is attached to the first ring (310) of the pivot bearing (300),
**characterized in that**
the adjustment mechanism further comprises
- a linear drive (230) with a toothed rack (231), said linear drive (230) is attached to the holder (210) and configured to generate a linear motion of the toothed rack (231) along a second axis (A),
wherein the toothed rack (231) is configured to engage with the gear wheel element (220) in order to convert a linear motion of the toothed rack (231) into an angular motion of the gear wheel element (220) and the optical unit (100) about the first axis (X), and wherein
the optical unit (100) comprises at least one light-forming component (110) configured to form the light distribution of the optical unit (100) by forming light emitted by the at least one light source (101), and wherein the optical unit (100) is arranged on a mount, said mount is attached to the first ring (310) of the pivot bearing (300), wherein
the optical unit (100) comprises at least one heatsink (120) configured to dissipate the heat of the at least one light source (101), wherein the at least one light source (101) is arranged on
the at least one heatsink (120), and wherein
the mount is the heatsink (120) configured to dissipate the heat of the at least one light source (101).

2. Illumination device (1) according to claim 1, **wherein** the optical unit (100) is arranged on one side of the pivot bearing (300) and the holder (210) is arranged on the side facing away from the optical unit (100) of the pivot bearing (300).

3. Illumination device (1) according to claim 1 or 2, **wherein** the linear drive (230) comprises an actuating element (232), on which the toothed rack (231) is attached, said actuating element (232) is moveable along the second axis (A).

4. Illumination device (1) according to any of the preceding claims, **wherein** the gear wheel element (220) comprises a base-body (221) from which a gear wheel (222) is protruding, said base-body (221) is inserted in the opening area of the holder (210).

5. Illumination device (1) according to any of the preceding claims, **wherein** the adjusting mechanism (200) comprises an internal control unit to control the linear drive (230).

6. Illumination device (1) according to any of the preceding claims, **wherein** the pivot bearing (300) is a ball bearing.

7. Illumination device (1) according to claims 1 to 5, **wherein** the pivot bearing (300) is a sliding bearing.

8. Illumination device (1) according to claim 1 to 7, **wherein** the at least one light-forming component (110) is designed as a reflector and/or a light-guiding element.

9. Illumination device (1) according to claim 1 to 8, **wherein** the optical unit (100) comprises at least one projection lens and/or a shade.

10. Illumination device (1) according to any of the preceding claims, **wherein** the optical unit (100) can be rotated within an angle between 0° and 70° about the first axis (X).

11. Stabilized illumination device (2) for irradiating a stabilized light distribution, comprising at least one illumination device (1) according to any of the preceding claims, an external control unit (410) and at least one roll angle sensor (420) configured to determine a roll angle (α) from a defined standard position of the illumination device (1) around the first axis (X), said external control unit (410) is configured to frequently, preferably constantly, receive a roll angle (α) from the at least one roll angle sensor (420) and to control the adjusting mechanism (200) in order to keep the optical unit (100) in the standard position.

12. Vehicle headlamp for single-track vehicles, comprising at least one illumination device (1) according to claim 1 to 10 and/or at least one stabilized illumination device (2) according to claim 11.

## Patentansprüche

1. Beleuchtungseinrichtung (1) für Fahrzeugscheinwerfer, insbesondere für einspurige Fahrzeugscheinwerfer, umfassend:
- eine optische Einheit (100) mit mindestens einer Lichtquelle (101), wobei die optische Einheit (100) so ausgebildet ist, dass sie eine Lichtverteilung mit einer Hell-Dunkel-Grenze bildet, wobei die Lichtverteilung abgestrahlt in eine Hauptstrahlrichtung (X1) wird, und
- einen Verstellmechanismus (200) zum Drehen der optischen Einheit (100) um eine erste Achse (X) mittels eines Drehlagers (300), wobei die erste Achse (X) parallel zur Hauptstrahlrichtung (X1) ausgerichtet ist, wobei
das Drehlager (300) einen ersten Ring (310) und einen zweiten Ring (320) aufweist, die konzentrisch angeordnet und um die erste Achse (X) zueinander drehbar sind, wobei die optische Einheit (100) an dem ersten Ring (310) befestigt ist, und wobei
der Einstellmechanismus (200) umfasst
- einen Halter (210), der an dem zweiten Ring (320) befestigt ist, und
- ein Zahnradelement (220), das in einen Öffnungsbereich des Halters (210) eingesetzt und um die erste Achse (X) drehbar ist, wobei das Zahnradelement (220) an dem ersten Ring (310) des Drehlagers (300) befestigt ist,
**dadurch gekennzeichnet, dass**
der Verstellmechanismus ferner umfasst
- einen Linearantrieb (230) mit einer Zahnstange (231), wobei der Linearantrieb (230) an der Halterung (210) angebracht ist und so konfiguriert ist, dass er eine lineare Bewegung der Zahnstange (231) entlang einer zweiten Achse (A) erzeugt,
wobei die Zahnstange (231) eingerichtet ist, dass sie mit dem Zahnradelement (220) in Eingriff kommt, um eine lineare Bewegung der Zahnstange (231) in eine Winkelbewegung des Zahnradelements (220) und der optischen Einheit (100) um die erste Achse (X) umzuwandeln, und wobei
die optische Einheit (100) mindestens ein lichtformendes Bauteil (110) aufweist, das dazu ausgebildet ist, die Lichtverteilung der optischen Einheit (100) durch Formung des von der mindestens einen Lichtquelle (101) emittierten Lichts zu formen, und wobei die optische Einheit (100) an einer Halterung angeordnet ist, die an dem ersten Ring (310) des Drehlagers (300) befestigt ist, wobei
die optische Einheit (100) mindestens einen Kühlkörper (120) umfasst, der eingerichtet ist, dass er die Wärme der mindestens einen Lichtquelle (101) ableitet, wobei die mindestens eine Lichtquelle (101) auf dem mindestens einen Kühlkörper (101) angeordnet ist, und wobei
die Halterung der Kühlkörper (120) ist, der eingerichtet ist, dass er die Wärme mindestens einer Lichtquelle (101) ableitet.

2. Beleuchtungseinrichtung (1) nach Anspruch 1, wobei die optische Einheit (100) auf einer Seite des Schwenklagers (300) und der Halter (210) auf der der optischen Einheit (100) abgewandten Seite des Schwenklagers (300) angeordnet ist.

3. Beleuchtungseinrichtung (1) nach Anspruch 1 oder 2, wobei der Linearantrieb (230) ein Betätigungselement (232) aufweist, an dem die Zahnstange (231) befestigt ist, wobei das Betätigungselement (232) entlang der zweiten Achse (A) bewegbar ist.

4. Beleuchtungseinrichtung (1) nach einem der vorhergehenden Ansprüche, wobei das Zahnradelement (220) einen Grundkörper (221) aufweist, von dem ein Zahnrad (222) absteht, wobei der Grundkörper (221) in den Öffnungsbereich des Halters (210) eingesetzt ist.

5. Beleuchtungseinrichtung (1) nach einem der vorhergehenden Ansprüche, wobei der Verstellmechanismus (200) eine interne Steuereinheit zur Steuerung des Linearantriebs (230) aufweist.

6. Beleuchtungseinrichtung (1) nach einem der vorhergehenden Ansprüche, wobei das Drehlager (300) ein Kugellager ist.

7. Beleuchtungseinrichtung (1) nach einem der Ansprüche 1 bis 5, wobei das Drehlager (300) ein Gleitlager ist.

8. Beleuchtungseinrichtung (1) nach einem der Ansprüche 1 bis 7, wobei das mindestens eine lichtformende Bauteil (110) als Reflektor und/oder als lichtleitendes Element ausgebildet ist.

9. Beleuchtungseinrichtung (1) nach einem der Ansprüche 1 bis 8, wobei die optische Einheit (100) mindestens eine Projektionslinse und/oder eine Blende umfasst.

10. Beleuchtungseinrichtung (1) nach einem der vorhergehenden Ansprüche, wobei die optische Einheit (100) innerhalb eines Winkels zwischen 0° und 70° um die erste Achse (X) gedreht werden kann.

11. Stabilisierte Beleuchtungseinrichtung (2) zum Abstrahlen einer stabilisierten Lichtverteilung, umfassend mindestens eine Beleuchtungseinrichtung (1) nach einem der vorhergehenden Ansprüche, eine externe Steuereinheit (410) und mindestens einen Rollwinkelsensor (420), der ausgebildet ist, aus einer definierten Standardposition der Beleuchtungseinrichtung (1) um die erste Achse (X) einen Rollwinkel (a) zu bestimmen, wobei die externe Steuereinheit (410) ausgebildet ist, häufig, vorzugsweise ständig, einen
Verrollungswinkel (a) von dem mindestens einen Verrollungswinkelsensor (420) zu empfangen und den Verstellmechanismus (200) zu steuern, um die optische Einheit (100) in der Standardposition zu halten.

12. Fahrzeugscheinwerfer für einspurige Fahrzeuge, umfassend mindestens eine Beleuchtungseinrichtung (1) nach einem der Ansprüche 1 bis 10 und/oder mindestens eine stabilisierte Beleuchtungseinrichtung (2) nach Anspruch 11.

## Revendications

1. Dispositif d'éclairage (1) pour phares de véhicules, en particulier pour phares de véhicules à voie unique, comprenant :
- une unité optique (100) avec au moins une source de lumière (101), ladite unité optique (100) est configurée pour former une distribution de lumière avec une ligne de coupure, la distribution de lumière étant rayonnée dans une direction de faisceau principal (X1), et
- un mécanisme de réglage (200) pour faire tourner l'unité optique (100) autour d'un premier axe (X) au moyen d'un palier de pivotement (300), dans lequel le premier axe (X) est orienté parallèlement à la direction du faisceau principal (X1), dans lequel
le palier de pivotement (300) comprend une première bague (310) et une seconde bague (320), disposées concentriquement et pouvant tourner l'une par rapport à l'autre autour du premier axe (X), dans lequel l'unité optique (100) est fixée à la première bague (310), et dans lequel
le mécanisme de réglage (200) comprend
- un support (210), fixé à la deuxième bague (320), et
- un élément de roue dentée (220), qui est inséré dans une zone d'ouverture du support (210) et qui peut tourner autour du premier axe (X), ledit élément de roue dentée (220) est fixé à la première bague (310) du palier de pivotement (300),
**caractérisé en ce que**
le mécanisme de réglage comprend en outre
- un entraînement linéaire (230) avec une crémaillère (231), ledit entraînement linéaire (230) est fixé au support (210) et configuré pour générer un mouvement linéaire de la crémaillère (231) le long d'un deuxième axe (A),
dans lequel la crémaillère (231) est configurée pour s'engager avec l'élément de roue dentée (220) afin de convertir un mouvement linéaire de la crémaillère (231) en un mouvement angulaire de l'élément de roue dentée (220) et de l'unité optique (100) autour du premier axe (X), et dans lequel
l'unité optique (100) comprend au moins un composant de formation de lumière (110) configuré pour former la distribution de lumière de l'unité optique (100) en formant la lumière émise par la au moins une source de lumière (101), et dans lequel l'unité optique (100) est disposée sur une monture, ladite monture est fixée à la première bague (310) du palier pivotant (300), dans lequel l'unité optique (100) comprend au moins un dissipateur thermique (120) configuré pour dissiper la chaleur de la au moins une source de lumière (101), dans laquelle la au moins une source de lumière (101) est disposée sur le au moins un dissipateur thermique (120).
sur le au moins un dissipateur thermique (120), et dans lequel
le support est le dissipateur thermique (120) configuré pour dissiper la chaleur de la au moins une source de lumière (101).

2. Dispositif d'éclairage (1) selon la revendication 1, dans lequel l'unité optique (100) est disposée sur un côté du palier pivotant (300) et le support (210) est disposé sur le côté opposé à l'unité optique (100) du palier pivotant (300).

3. Dispositif d'éclairage (1) selon la revendication 1 ou 2, dans lequel l'entraînement linéaire (230) comprend un élément d'actionnement (232), sur lequel la crémaillère (231) est fixée, ledit élément d'actionnement (232) est mobile le long du deuxième axe (A).

4. Dispositif d'éclairage (1) selon l'une quelconque des revendications précédentes, dans lequel l'élément de roue dentée (220) comprend un corps de base (221) duquel fait saillie une roue dentée (222), ledit corps de base (221) est inséré dans la zone d'ouverture du support (210).

5. Dispositif d'éclairage (1) selon l'une quelconque des revendications précédentes, dans lequel le mécanisme de réglage (200) comprend une unité de commande interne pour commander l'entraînement linéaire (230).

6. Dispositif d'éclairage (1) selon l'une quelconque des revendications précédentes, dans lequel le palier de pivotement (300) est un roulement à billes.

7. Dispositif d'éclairage (1) selon les revendications 1 à 5, dans lequel le palier pivot (300) est un palier lisse.

8. Dispositif d'éclairage (1) selon la revendication 1 à 7, dans lequel le au moins un composant formant la lumière (110) est conçu comme un réflecteur et/ou un élément de guidage de la lumière.

9. Dispositif d'éclairage (1) selon la revendication là 8, dans lequel l'unité optique (100) comprend au moins une lentille de projection et/ou un abat-jour.

10. Dispositif d'éclairage (1) selon l'une quelconque des revendications précédentes, dans lequel l'unité optique (100) peut être tournée dans un angle compris entre 0° et 70° autour du premier axe (X).

11. Dispositif d'éclairage stabilisé (2) pour irradier une distribution lumineuse stabilisée, comprenant au moins un dispositif d'éclairage (1) selon l'une quelconque des revendications précédentes, une unité de commande externe (410) et au moins un capteur d'angle de roulis (420) configuré pour déterminer un angle de roulis (a) à partir d'une position standard définie du dispositif d'éclairage (1) autour du premier axe (X), ladite unité de commande externe (410) est configurée pour recevoir fréquemment, de préférence constamment, un angle de roulis (a) de l'unité de commande externe (410).
angle de roulis (a) provenant du au moins un capteur d'angle de roulis (420) et pour commander le mécanisme de réglage (200) afin de maintenir l'unité optique (100) dans la position standard.

12. Projecteur de véhicule pour véhicules à voie unique, comprenant au moins un dispositif d'éclairage (1) selon les revendications 1 à 10 et/ou au moins un dispositif d'éclairage stabilisé (2) selon la revendication 11.
